# EUROPEAN PATENT APPLICATION

(11) **EP 4 576 405 A1**
(43) Date of publication of application: **25.06.2025**
(21) Application number: 23875220.8
(22) Date of filing: 05.10.2023
(51) Int. Cl.: H01M 50/581, H01M 50/107, H01M 50/152, H01M 50/186

(54) **CYLINDRICAL SECONDARY BATTERY COMPRISING TOP CAP**

(30) Priority: 05.10.2022 KR 20220127432; 25.09.2023 KR 20230128587
(71) Applicant: LG Energy Solution, Ltd., Seoul 07335 (KR)
(72) Inventor: SONG, Hyeon Min, Daejeon 34122 (KR)
(74) Representative: Goddar, Heinz J.
(86) International application number: PCT/KR2023/015277
(87) International publication number: WO 2024/076157

(57) **Abstract**

A cylindrical type secondary battery according to an embodiment of the present invention may include a cylindrical can provided to accommodate an electrode assembly, and a top cap provided to cover an opened upper portion of the cylindrical can. The top cap may include a first conductive part, a second conductive part disposed below the first conductive part and electrically connected to the electrode assembly, and an intermediate layer part including a third conductive part disposed between the first conductive part and the second conductive part to be in contact with each of the first conductive part and the second conductive part, wherein, when a temperature of the third conductive part is a predetermined temperature or higher, the third conductive part is melted so that the contact between the third conductive part and the first conductive part or the second conductive part is released. The intermediate layer part may include a gasket part that is disposed between the first conductive part and the second conductive part and defines a through-region between the gasket part and the third conductive part in a state in which the third conductive part is disposed to pass through the intermediate layer part.

## Description

### TECHNICAL FIELD

### CROSS-REFERENCE TO RELATED APPLICATION

The present application claims the benefit of the priority of Korean Patent Application Nos. 10-2022-0127432, filed on October 05, 2022, and 10-2023-0128587, filed on September 25, 2023, which are hereby incorporated by reference in their entirety.

### TECHNICAL FIELD

The present invention relates to a cylindrical type secondary battery including a top cap.

### BACKGROUND ART

Research on and development of power production based on eco-friendly energy sources are carried out in order to solve environmental pollution problems caused by use of fossil fuels and to solve energy source problems caused by depletion of fossil fuels. In particular, research on secondary batteries capable of being charged repeatedly is actively carried out, and the research is carried out on various aspects such as materials, structures, processes, and stability of the secondary batteries.

With regard to the structures of the secondary batteries, the secondary batteries may be classified into a pouch type, a prismatic type, a cylindrical type, and the like according to the shapes of battery cases for accommodating electrode assemblies. Jelly-roll-type electrode assemblies having wound shapes are embedded in cylindrical type secondary batteries. The electrode assemblies inside the cylindrical type secondary batteries may be electrically connected to cylindrical cans and top caps through electrode tabs. In terms of the stability of the cylindrical type secondary batteries, the top caps may be provided with structures capable of cutting off current when overcurrent flows therethrough.

According to the related art, in order to secure the stability of the cylindrical type secondary batteries, current interrupt members provided to be separated when overcurrent flows are used, or when overcurrent flows, the electrode tabs are broken to cut off the current.

### DISCLOSURE OF THE INVENTION

### TECHNICAL PROBLEM

An object of the present invention for solving the above problems is to provide a top cap capable of simply and effectively cutting off overcurrent of a cylindrical type battery, and a cylindrical type secondary battery including the top cap.

### TECHNICAL SOLUTION

A cylindrical type secondary battery according to an embodiment of the present invention may include a cylindrical can provided to accommodate an electrode assembly, and a top cap provided to cover an opened upper portion of the cylindrical can. The top cap may include a first conductive part, a second conductive part disposed below the first conductive part and electrically connected to the electrode assembly, and an intermediate layer part including a third conductive part disposed between the first conductive part and the second conductive part to be in contact with each of the first conductive part and the second conductive part, wherein, when a temperature of the third conductive part is a predetermined temperature or higher, the third conductive part is melted so that the contact between the third conductive part and the first conductive part or the second conductive part is released. The intermediate layer part may include a gasket part that is disposed between the first conductive part and the second conductive part and defines a through-region between the gasket part and the third conductive part in a state in which the third conductive part is disposed to pass through the intermediate layer part.

The intermediate layer part may include the gasket part provided to surround the third conductive part with spacing from the third conductive part, and when the temperature of the third conductive part is the predetermined temperature or higher, the third conductive part may be melted to decrease a height thereof so that the contact is released.

The third conductive part may have a lower melting point than a melting point of each of the first conductive part and the second conductive part.

The third conductive part may overlap each of the first conductive part and the second conductive part when viewed from above.

The cylindrical can may include a seating part provided on an inner surface thereof so that the intermediate layer part is seated on the seating part, and as the intermediate layer part is seated on the seating part, the top cap may cover the opened upper portion.

An edge of the intermediate layer part may have a circular shape when viewed from above, and the third conductive part may have an annular shape when viewed from above.

The intermediate layer part may include the gasket part in which a through-region having an annular shape is defined, and the third conductive part may be disposed to be in contact with a portion corresponding to a minor radius of the through-region of the gasket part when viewed from above.

The first conductive part and the second conductive part may be electrically connected to each other through the third conductive part when the temperature of the third conductive part is lower than the predetermined temperature, and the electrical connection may be cut off when the third conductive part reaches at the predetermined temperature or higher to be melted.

The third conductive part may be provided to be in surface contact with each of the first conductive part and the second conductive part.

A top cap according to an embodiment of the present invention may cover an upper portion of a cylindrical type secondary battery provided so that an electrode assembly is accommodated therein, and the top cap include a first conductive part, a second conductive part disposed below the first conductive part and electrically connected to the electrode assembly, and an intermediate layer part including: a third conductive part disposed between the first conductive part and the second conductive part to be in contact with each of the first conductive part and the second conductive part, wherein, when a temperature of the third conductive part is a predetermined temperature or higher, the third conductive part is melted so that the contact between the third conductive part and the first conductive part or the second conductive part is released; and a gasket part that defines a through-region between the gasket part and the intermediate layer part in a state in which the third conductive part is disposed to pass through the intermediate layer part.

The intermediate layer part may include the gasket part provided to surround the third conductive part with spacing from the third conductive part, and when the temperature of the third conductive part is the predetermined temperature or higher, the third conductive part may be melted to decrease a height thereof so that the contact is released.

The third conductive part may have a lower melting point than a melting point of each of the first conductive part and the second conductive part.

The intermediate layer part may include the gasket part provided so that the third conductive part is coupled to an outer surface thereof, and when the temperature of the third conductive part is the predetermined temperature or higher, the third conductive part may be melted to decrease a height thereof so that the contact is released.

### ADVANTAGEOUS EFFECTS

According to the preferred embodiments of the present invention, the overcurrent may be cut off simply and effectively.

### BRIEF DESCRIPTION OF THE DRAWINGS

FIG. 1 is a perspective view illustrating a cylindrical type secondary battery according to an embodiment of the present invention.
FIG. 2 is a plan view illustrating a cylindrical type secondary battery according to an embodiment of the present invention.
FIG. 3 is a lateral cross-sectional view illustrating a cylindrical type secondary battery according to an embodiment of the present invention.
FIG. 4 is an exploded perspective view illustrating a top cap according to an embodiment of the present invention.
FIG. 5 is a lateral cross-sectional view illustrating a top cap in a state in which current is not cut off according to an embodiment of the present invention.
FIG. 6 is a lateral cross-sectional view illustrating a top cap in a state in which current is cut off according to an embodiment of the present invention.
FIG. 7 is a lateral cross-sectional view illustrating a top cap according to another embodiment of the present invention.
FIG. 8 is a lateral cross-sectional view illustrating a top cap according to still another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

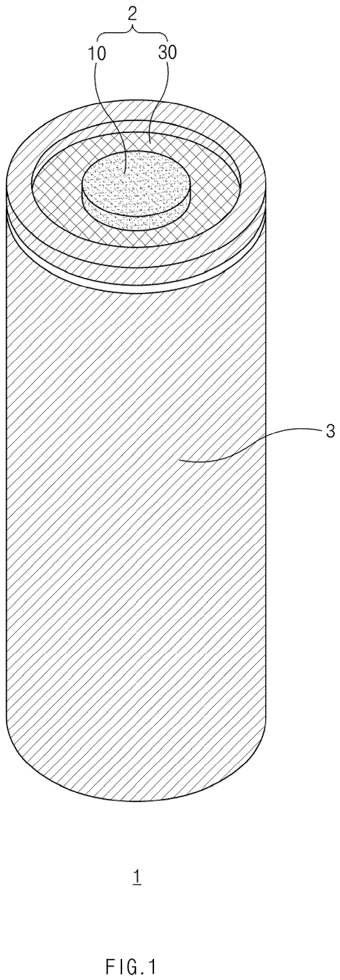

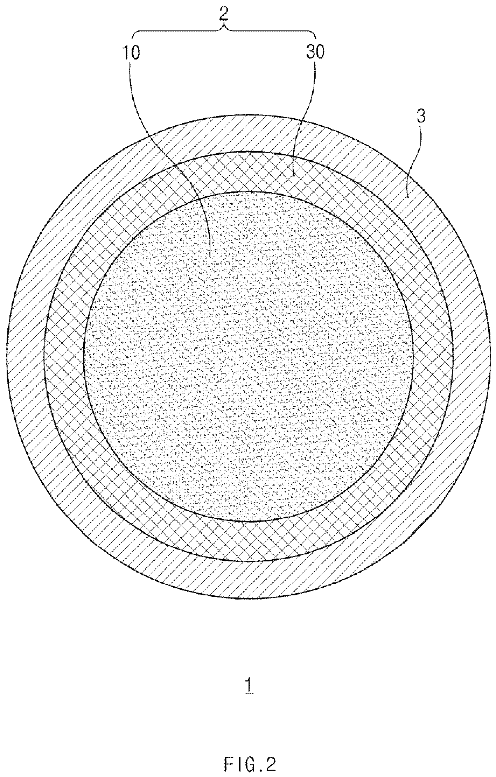

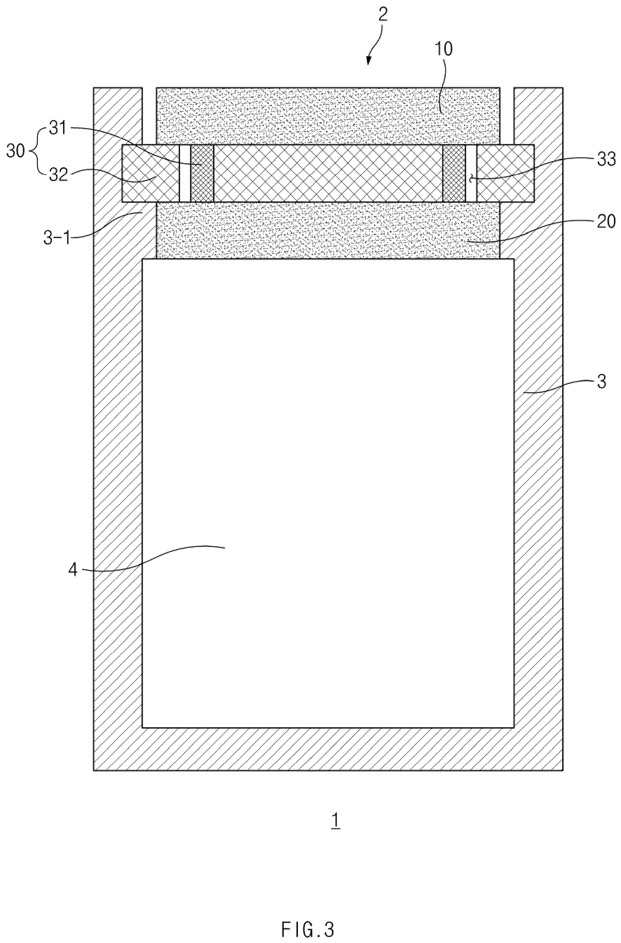

FIG. 1 is a perspective view illustrating a cylindrical type secondary battery 1 according to an embodiment of the present invention. FIG. 2 is a plan view illustrating the cylindrical type secondary battery 1 according to an embodiment of the present invention. FIG. 3 is a lateral cross-sectional view illustrating the cylindrical type secondary battery 1 according to an embodiment of the present invention.

The cylindrical type secondary battery 1 may be a secondary battery capable of being repeatedly charged and discharged, and having a cylindrical shape. An electrode assembly 4 may be accommodated inside the cylindrical type secondary battery 1, and the electrode assembly 4 may be electrically connected to the outside through a conductive member (e.g., top cap).

The cylindrical type secondary battery 1 may include a top cap 2. The top cap 2 may cover an upper portion of the cylindrical type secondary battery 1. For example, the top cap 2 may provide an outer appearance at an upper portion of the cylindrical type secondary battery 1. The top cap 2 may include a conductive member. For example, when the electrode assembly 4 is accommodated inside the cylindrical type secondary battery 1, the electrode assembly 4 may be electrically connected to the outside through the top cap 2 including the conductive member.

The cylindrical type secondary battery 1 may include a cylindrical can 3. The cylindrical can 3 may be provided so that the electrode assembly 4 is accommodated therein. For example, an inner space having a shape corresponding to a shape of the electrode assembly 4 may be defined. The electrode assembly 4 may be a jelly-roll-type electrode assembly having a wound shape, but the shape or configuration of the electrode assembly may not be particularly limited.

The top cap 2 may cover an opened upper portion of the cylindrical can 3. For example, the cylindrical can 3 may be provided so that the upper portion thereof is opened. The electrode assembly 4 may be drawn in and out through the opened upper portion of the cylindrical can 3. The top cap 2 may be seated on the cylindrical can 3 so as to cover the opened upper portion of the cylindrical can 3. For example, the top cap 2 may be seated on a seating part 3-1 of the cylindrical can 3. The seating part 3-1 may be provided on an upper portion of an inner surface of the cylindrical can 3, and have a shape protruding to the inside so that the top cap 2 is seated thereon. The structure or shape of the seating part 3-1 may not be particularly limited as long as the top cap 2 is capable of being seated on the cylindrical can 3.

The top cap 2 may include a first conductive part 10. The first conductive part 10 may include a conductive member. For example, the first conductive part 10 may be a metal plate.

The top cap 2 may include a second conductive part 20. The second conductive part 20 may include a conductive member. For example, the second conductive part 20 may be a metal plate. The second conductive part 20 may be disposed below the first conductive part 10. For example, the second conductive part 20 may be disposed below the first conductive part 10 with an intermediate layer part 30 to be described later between the second conductive part 20 and the first conductive part 10. The second conductive part 20 may be electrically connected to the electrode assembly 4. For example, the second conductive part 20 may be in contact with the electrode assembly 4 to be electrically connected to the electrode assembly 4.

The top cap 2 may include the intermediate layer part 30. For example, the intermediate layer part 30 may be disposed between the first conductive part 10 and the second conductive part 20. The intermediate layer part 30 may have a portion overlapping each of the first conductive part 10 and the second conductive part 20 when viewed from above.

The intermediate layer part 30 may include a third conductive part 31. The third conductive part 31 may be disposed between the first conductive part 10 and the second conductive part 20 to be in contact with each of the first conductive part 10 and the second conductive part 20. As the third conductive part 31 is in contact with each of the first conductive part 10 and the second conductive part 20, the third conductive part 31 may electrically connect the first conductive part 10 to the second conductive part 20. The third conductive part 31 may be in contact with a portion of each of the first conductive part 10 and the second conductive part 20 so as to be in surface contact with each of the first conductive part 10 and the second conductive part 20. The third conductive part 31 may have the same (or corresponding) height as a gasket part 32. For example, as the third conductive part 31 is disposed in the gasket part 32 while being in contact with each of the first conductive part 10 and the second conductive part 20 in order to electrically connect the first conductive part 10 to the second conductive part 20, the third conductive part 31 may have the same height as the gasket part 32.

The intermediate layer part 30 may include the gasket part 32. The gasket part 32 may be disposed between the first conductive part 10 and the second conductive part 20. In addition, the gasket part 32 may have a shape surrounding the third conductive part 31. For example, the gasket part 32 may be provided to surround the third conductive part 31 with spacing from the third conductive part 31. In other words, the third conductive part 31 may be disposed to have a shape passing through the gasket part 32. Alternatively, the gasket part 32 may include a portion provided to surround the third conductive part 31 with spacing from the third conductive part 31.

A through-region 33 may be defined in the intermediate layer part 30. For example, the through-region 33 may be a region between the gasket part 32 and the third conductive part 31 in a state in which the third conductive part 31 is disposed to pass through the gasket part 30. In other words, the through-region 33 may be a concept of a space that is defined between the third conductive part 31 and the gasket part 30 when the gasket part 32 is disposed between the first conductive part 10 and the second conductive part 20. Alternatively, the through-region 33 may be a region defined by a gap between the gasket part 32 and the third conductive part 31.

Although the through-region 33 is described as being defined in the intermediate layer part 30 as above, the intermediate layer part 30 is not limited thereto. For example, even though the intermediate layer part 30 is not penetrated, the intended purpose and effects of the present invention may be achieved just by securing a predetermined region (or space) provided so that when the third conductive part 31 is melted, the melted third conductive part 31 flows therein. In other words, when the third conductive part 31 is melted, the melted third conductive part 31 may flow into the predetermined region (or space) to release the contact between the third conductive part 31 and the first conductive part 10 or second conductive part 20. Accordingly, the cutoff of the electrical connection may be enabled.

As the intermediate layer part 30 is seated on the seating part 3-1, the top cap 2 may cover the opened upper portion of the cylindrical can 3. For example, the intermediate layer part 30 of the top cap 2 may be seated on the seating part 3-1. The seating part 3-1 may be provided on the inner surface of the cylindrical can 3 so that the intermediate layer part 30 is seated thereon. Specifically, as the gasket part 32 of the intermediate layer part 30 is seated on the seating part 3-1 of the cylindrical can 3, the opened upper portion of the cylindrical can 3 may be covered (or sealed).

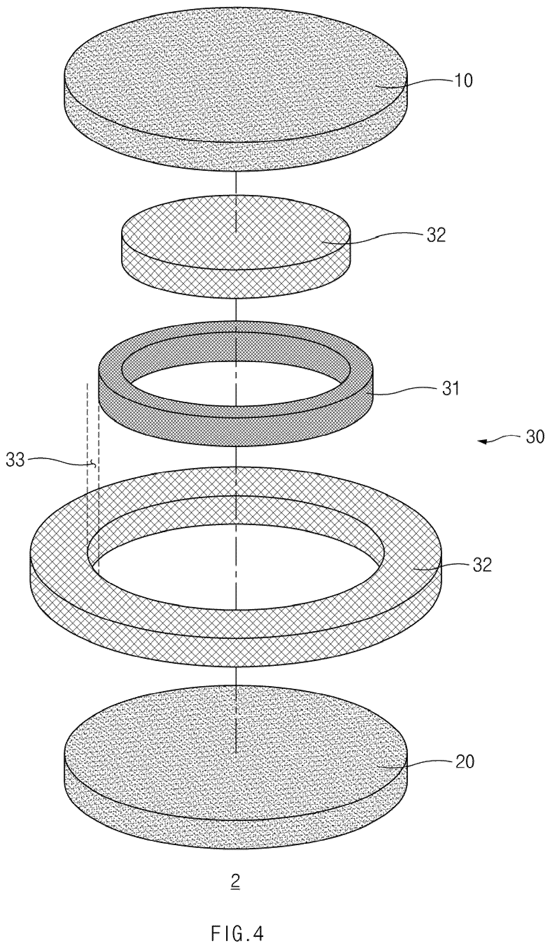

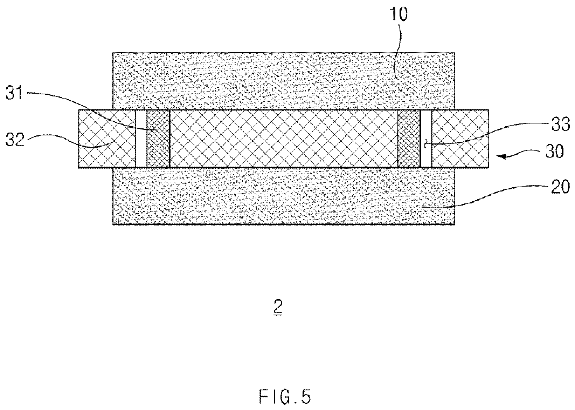

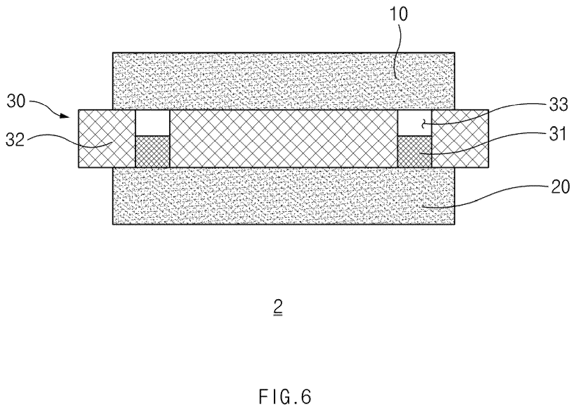

FIG. 4 is an exploded perspective view illustrating a top cap 2 according to an embodiment of the present invention. FIG. 5 is a lateral cross-sectional view illustrating the top cap 2 in a state in which current is not cut off according to an embodiment of the present invention. FIG. 6 is a lateral cross-sectional view illustrating the top cap 2 in a state in which current is cut off according to an embodiment of the present invention. The same or similar description as or to the foregoing description may also apply to this embodiment.

A third conductive part 31 may overlap each of a first conductive part 10 and a second conductive part 20 when viewed from above. For example, the third conductive part 31 may be disposed between the first conductive part 10 and the second conductive part 20 in order to electrically connect the first conductive part 10 to the second conductive part 20, and include a portion overlapping each of the first conductive part 10 and the second conductive part 20 when viewed from above.

An edge of an intermediate layer part 30 may have a circular shape, and the third conductive part 31 may have an annular shape when viewed from above. For example, the edge of the intermediate layer part 30 may correspond to an edge of a gasket part 32, and the intermediate layer part 30 may have the edge having a circular shape so as to be seated on a cylindrical can 3. The third conductive part 31 may have an annular shape, and as the third conductive part 31 is coupled to an inner surface of the gasket part 32, a through-region 33 having an annular shape may be defined. In other words, the third conductive part 31 may be disposed to be in contact with a portion corresponding to a minor radius of the through-region 33 of the gasket part 32. A volume of the through-region 33 may be pre-designed. The shape of the third conductive part 31 described above is not limited to the annular shape, and the third conductive part 31 may be embodied in various forms according to a design.

The third conductive part 31 may have a lower melting point than a melting point of each of the first conductive part 10 and the second conductive part 20. For example, when overcurrent flows through the first conductive part 10, the second conductive part 20, and the third conductive part 31, the third conductive part 31 may be melted, but the first conductive part 10 and the second conductive part 20 may not be melted. As described above, only the third conductive part 31 may be melted due to the overcurrent, and the gasket part 32 may be disposed between the first conductive part 10 and the second conductive part 20 to support the first conductive part 10 and the second conductive part 20. Thus, this may be advantageous in terms of structural stability. Even when the third conductive part 31 is melted due to the overcurrent, the shape of the gasket part 32 may be maintained so that an overall outer shape and a position of the intermediate layer part 30 are maintained without being changed.

As the third conductive part 31 is melted, the contact between the third conductive part 31 and the first conductive part 10 or the second conductive part 20 may be released. For example, when a temperature of the third conductive part 31 is higher than a predetermined temperature due to the overcurrent, the third conductive part 31 may be melted to decrease a height thereof so that the contact between the third conductive part 31 and the first conductive part 10 or the second conductive part 20 is released. In other words, when the temperature of the third conductive part 31 is higher than the predetermined temperature, and thus the third conductive part 31 is melted, an electrical connection between the first conductive part 10 and the second conductive part 20 may be cut off. For another example, when overcurrent does not flow, and thus the temperature of the third conductive part 31 is lower than the predetermined temperature, the third conductive part 31 may not be melted, and the contact may be maintained. In other words, when the temperature of the third conductive part 31 is lower than the predetermined temperature, and thus the third conductive part 31 is not melted, the electrical connection between the first conductive part 10 and the second conductive part 20 may be maintained through the third conductive part 31.

As described above, when the overcurrent flows, the third conductive part 31 may be melted so that the contact between the third conductive part 31 and the first conductive part 10 or the second conductive part 20 is released to cut off the electrical connection therebetween. Accordingly, the overcurrent may be cut off simply and effectively.

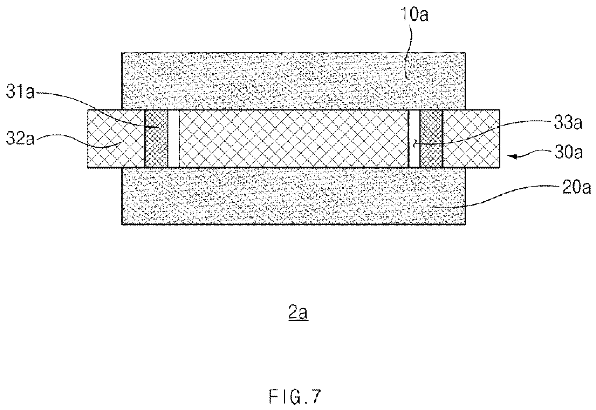

FIG. 7 is a lateral cross-sectional view illustrating a top cap 2a according to another embodiment of the present invention. The same or similar description as or to the foregoing description may also apply to this embodiment.

The top cap 2a may include a third conductive part 31a. A through-region 31a may be defined between the third conductive part 31a and a gasket part 32a. As illustrated in FIG. 7, the through-region 31a may be defined at a different position from the through-region 31 in FIG. 3 or 5.

As the third conductive part 31a is, as illustrated in FIG. 7, disposed to have a larger radius than a radius of the third conductive part 31, a contact area with each of a first conductive part 10a and a second conductive part 20a may be increased.

When the contact area between the third conductive part 31a and each of the first conductive part 10a and the second conductive part 20a is increased, current may more effectively flow.

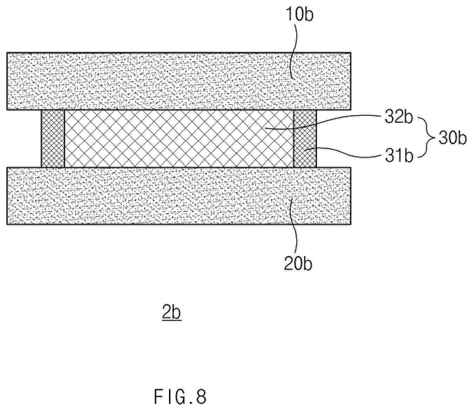

FIG. 8 is a lateral cross-sectional view illustrating a top cap 2b according to another embodiment of the present invention. The same or similar description as or to the foregoing description may also apply to this embodiment.

The top cap 2b may cover an opened upper portion of a cylindrical can 3. For example, a second conductive part 20b of the top cap 2b may be coupled and fixed to an inner surface of the cylindrical can 3. In this case, even when the intermediate layer part 30 or 30a described above is not seated on a seating part 3-1 of the cylindrical can 3, the opened upper portion of the cylindrical can 3 may be covered.

A third conductive part 32b may be disposed to surround at least a portion of an outer surface of a gasket part 32b. For example, the third conductive part 31b may be disposed while surrounding the outer surface of the gasket part 32b, and be in contact with each of a first conductive part 10b and the second conductive part 20b.

As described above, a volume of the gasket part 32b may be reduced to lead to an advantage in production, and as the second conductive part 20b is fixed to the inner surface of the cylindrical can 3, a space in which the third conductive part 31b is capable of flowing when the third conductive part 31b is melted may be secured without a separate process. In addition, a size of the third conductive part 31b may be adjusted according to a design to adjust a degree of current conductivity.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

1: Cylindrical type secondary battery
2, 2a, 2b: Top cap
3: Cylindrical can
3-1: Seating part
4: Electrode assembly
10, 10a, 10b: First conductive part
20, 20a, 20b: Second conductive part
30, 30a, 30b: Intermediate layer part
31, 31a, 31b: Third conductive part
32, 32a, 32b: Gasket part
33, 33a: Through-region

## Claims

1. A cylindrical type secondary battery comprising:
a cylindrical can configured to accommodate an electrode assembly; and
a top cap provided to cover an opened upper portion of the cylindrical can,
wherein the top cap comprises:
a first conductive part;
a second conductive part disposed below the first conductive part and electrically connected to the electrode assembly; and
an intermediate layer part comprising a third conductive part disposed between the first conductive part and the second conductive part to be in contact with each of the first conductive part and the second conductive part, wherein, when a temperature of the third conductive part is a predetermined temperature or higher, the third conductive part is melted so that the contact between the third conductive part and the first conductive part or the second conductive part is released,
wherein the intermediate layer part comprises a gasket part disposed between the first conductive part and the second conductive part, and configured to define a through-region between the gasket part and the third conductive part in a state in which the third conductive part is disposed to pass through the intermediate layer part.

2. The cylindrical type secondary battery of claim 1, wherein the intermediate layer part comprises the gasket part configured to surround the third conductive part with spacing from the third conductive part, and
when the temperature of the third conductive part is the predetermined temperature or higher, the third conductive part is melted to decrease a height thereof so that the contact is released.

3. The cylindrical type secondary battery of claim 1, wherein the third conductive part has a lower melting point than a melting point of each of the first conductive part and the second conductive part.

4. The cylindrical type secondary battery of claim 1, wherein the third conductive part overlaps each of the first conductive part and the second conductive part when viewed from above.

5. The cylindrical type secondary battery of claim 1, wherein the cylindrical can comprises a seating part provided on an inner surface thereof so that the intermediate layer part is seated on the seating part, and
wherein, as the intermediate layer part is seated on the seating part, the top cap covers the opened upper portion.

6. The cylindrical type secondary battery of claim 1, wherein an edge of the intermediate layer part has a circular shape when viewed from above, and
the third conductive part has an annular shape when viewed from above.

7. The cylindrical type secondary battery of claim 1, wherein the intermediate layer part comprises the gasket part in which a through-region having an annular shape is defined, and
the third conductive part is disposed to be in contact with a portion corresponding to a minor radius of the through-region of the gasket part when viewed from above.

8. The cylindrical type secondary battery of claim 1, wherein the first conductive part and the second conductive part are electrically connected to each other through the third conductive part when the temperature of the third conductive part is lower than the predetermined temperature, and
the electrical connection is cut off when the third conductive part reaches at the predetermined temperature or higher to be melted.

9. The cylindrical type secondary battery of claim 1, wherein the third conductive part is provided to be in surface contact with each of the first conductive part and the second conductive part.

10. A top cap configured to cover an upper portion of a cylindrical can provided so that an electrode assembly is accommodated therein, the top cap comprising:
a first conductive part;
a second conductive part disposed below the first conductive part and electrically connected to the electrode assembly; and
an intermediate layer part,
wherein the intermediate layer part comprises:
a third conductive part disposed between the first conductive part and the second conductive part to be in contact with each of the first conductive part and the second conductive part, wherein, when a temperature of the third conductive part is a predetermined temperature or higher, the third conductive part is melted so that the contact between the third conductive part and the first conductive part or the second conductive part is released; and
a gasket part configured to define a through-region between the gasket part and the intermediate layer part in a state in which the third conductive part is disposed to pass through the intermediate layer part.

11. The top cap of claim 10, wherein the intermediate layer part comprises the gasket part comprising a portion configured to surround the third conductive part with spacing from the third conductive part, and
when the temperature of the third conductive part is the predetermined temperature or higher, the third conductive part is melted to decrease a height thereof so that the contact is released.

12. The top cap of claim 10, wherein the third conductive part has a lower melting point than a melting point of each of the first conductive part and the second conductive part.

13. The top cap of claim 10, wherein the intermediate layer part comprises the gasket part provided so that the third conductive part is coupled to an outer surface thereof, and
when the temperature of the third conductive part is the predetermined temperature or higher, the third conductive part is melted to decrease a height thereof so that the contact is released.
